(19) **Europäisches Patentamt / European Patent Office / Office européen des brevets**

(11) **EP 3 497 805 B1**

(12) **EUROPEAN PATENT SPECIFICATION**

(45) Date of publication and mention of the grant of the patent:
**27.04.2022 Bulletin 2022/17**

(21) Application number: **17758325.9**

(22) Date of filing: **11.08.2017**

(51) International Patent Classification (IPC):
**H04B 7/0404** $^{(2017.01)}$ **H04B 17/318** $^{(2015.01)}$
**H04W 52/24** $^{(2009.01)}$ **H04W 52/50** $^{(2009.01)}$
**H04L 5/00** $^{(2006.01)}$

(52) Cooperative Patent Classification (CPC):
**H04B 7/0404; H04B 17/318; H04L 5/005;**
**H04L 5/0094; H04W 52/24; H04W 52/50;**
H04W 52/242; H04W 52/245

(86) International application number:
**PCT/US2017/046464**

(87) International publication number:
**WO 2018/031869 (15.02.2018 Gazette 2018/07)**

(54) **METHOD FOR UPLINK TRANSMISSION**

VERFAHREN ZUR UPLINK-ÜBERTRAGUNG

PROCÉDÉ DE TRANSMISSION DE LIAISON MONTANTE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **11.08.2016 US 201662373731 P**

(43) Date of publication of application:
**19.06.2019 Bulletin 2019/25**

(73) Proprietor: **NTT Docomo, Inc.**
**Tokyo 100-6150 (JP)**

(72) Inventors:
• **KAKISHIMA, Yuichi**
**Tokyo 100-6150 (JP)**
• **YASUKAWA, Shinpei**
**Tokyo 100-6150 (JP)**
• **OSAWA, Ryosuke**
**Tokyo 100-6150 (JP)**
• **HARADA, Hiroki**
**Tokyo 100-6150 (JP)**

• **NAGATA, Satoshi**
**Tokyo 100-6150 (JP)**

(74) Representative: **Osha Liang**
**2, rue de la Paix**
**75002 Paris (FR)**

(56) References cited:
WO-A1-2013/042982 US-A1- 2011 243 079
US-A1- 2014 376 482 US-A1- 2016 165 575

• ERICSSON / ST-ERICSSON: "On the Configuration of SRS-Related parameters by DCI Format 4", 3GPP DRAFT; R1-110454, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Dublin, Ireland; 20110117, 11 January 2011 (2011-01-11), XP050490279,

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

# Description

[Technical Field]

The present invention generally relates to a method of wireless communications and, more particularly, to a physical uplink shared channel, PUSCH, transmission method carried out by a user equipment to a base station as well as a corresponding system.

[Background Art]

A New Radio (NR; fifth generation (5G) radio access technology) system operating in higher frequency bands (e.g., Millimeter Wave (mmWave)) are being studied in the Third Generation Partnership Project (3GPP). A user equipment (UE) operated in the higher frequency bands such as mmWave may equip two or more antenna panels, each of which might have different directivity from each other. For example, the two or more antenna panels may be disposed on two planes such as a front plane and a back plane of the UE. Each plane of the UE may include at least an antenna panel. Alternatively, multiple antenna panels may be disposed on 4, 6, or more planes of the UE.

Furthermore, mmWave channel characteristics differ greatly from channel characteristics of conventional frequency bands. As a result, for example, only a part of the multiple antenna panels of the UE may effectively operate compared to other multiple antenna panels, due to large path loss and blockage for higher frequency bands.

Therefore, an effective antenna panel switching (selection) technology may be required in a wireless communication system operating in higher frequency bands such as mmWave bands. However, current Long Term Evolution (LTE) standards do not support an antenna panel switching scheme, which is required for NR system.

Patent Reference 1 describes a method and apparatus of transmitting and receiving an uplink reference signal, such as an SRS (Sounding Reference Signal). A reference signal transmitting method according to Patent Reference 1 includes the steps of receiving an SRS (Sounding Reference Signal) request over a downlink control channel and transmitting SRS according to the SRS request, wherein antenna ports that perform uplink transmission are divided into a first group and a second group. The SRSs may be transmitted through antenna ports included in one of the first group and the second group.

Patent Reference 2 describes a method and device for transmitting a sounding reference signal (SRS) in a cooperative communication system. The method comprises the steps of: receiving, from a macro base station, SRS resource information indicating transmission resources of an SRS to be transmitted by a user equipment (UE); transmitting the SRS and uplink data on the basis of a UE-specific SRS subframe configuration included in the SRS resource information when the SRS resource information includes information on the UE-specific SRS subframe configuration; and transmitting the SRS and the uplink data on the basis of a pre-stored cell-specific SRS subframe configuration when the SRS resource information does not include the information on the UE-specific SRS subframe configuration. When a destination of the SRS to be transmitted by the UE is selected as a base station related to the macro base station, the SRS resource information includes information on the UE-specific SRS subframe configuration of the base station selected as the destination of the SRS.

[Citation List]

[Non-Patent References]

[Non-Patent Reference 1] 3GPP, TS 36.211 V 13.2.0
[Non-Patent Reference 2] 3GPP, TS 36.213 V 13.2.0

[Patent References]

[Patent Reference 1] WO 2013/042982 A1
[Patent Reference 2] US 2014/376482 A1

[Summary of the Invention]

The invention is defined by a method as defined in claim 1 and by a system as defined in claim 2.

The claimed invention corresponds to the disclosure of the "Fifth Example" and to the example labelled as "Another Example of Transmission resource Selection for Uplink Channel Transmission" in this description.

The remaining examples disclosed in the description do not form part of the claimed invention, but are useful in understanding the invention.

[Brief Description of the Drawings]

FIG. 1 is a diagram showing a configuration of a wireless communication system which may be used with a method according to one or more embodiments of the present invention.

FIGs. 2A, 2B, 2C, 2D, and 2E are diagrams showing example deployment configurations of multiple transmission resources of a UE which may be used with a method according to one or more embodiments of the present invention.

FIG. 3 is a sequence diagram showing an example operation for PUSCH transmission according to one or more embodiments of a first example not making part of the present invention.

FIG. 4 is a sequence diagram showing an example operation for PUSCH transmission according to one or more embodiments of a modified first example not making part of the present invention.

FIG. 5 is a sequence diagram showing an example operation for PUSCH transmission according to one or more embodiments of a modified first example not making part of the present invention.

FIG. 6 is a sequence diagram showing an example operation for PUSCH transmission according to one or more embodiments of a second example not making part of the present invention.

FIG. 7 is a sequence diagram showing an example operation for PUSCH transmission according to one or more embodiments of a modified second example not making part of the present invention.

FIG. 8 is a sequence diagram showing an example operation for PUSCH transmission according to one or more embodiments of a third example not making part of the present invention.

FIG. 9 is a sequence diagram showing an example operation for PUSCH transmission according to one or more embodiments of a fourth example not making part of the present invention.

FIG. 10 is a sequence diagram showing an example operation for PUSCH transmission according to one or more embodiments of a fifth example of the present invention.

FIG. 11 is a diagram showing an example of transmission resource selection according to one or more embodiments of another example not making part of the present invention.

FIG. 12 is a sequence diagram showing an example operation for SRS transmission according to one or more embodiments of a sixth example not making part of the present invention,

FIG. 13 is a sequence diagram showing an example operation for SRS transmission according to one or more embodiments of a modified sixth example not making part of the present invention.

FIG. 14 is a sequence diagram showing an example operation of transmission resource selection according to one or more embodiments of another example of the present invention.

FIG. 15 is a block diagram showing a schematic configuration of a base station which may be used with a system according to one or more embodiments making of the present invention.

FIG. 16 is a block diagram showing a schematic configuration of a user equipment which may be used with a method according to one or more embodiments of the present invention.

[Detailed Description of Embodiments]

Embodiments of the present invention will be described in detail below, with reference to the drawings.

In embodiments of the invention, numerous specific details are set forth in order to provide a more thorough understanding of the invention. However, it will be apparent to one of ordinary skill in the art that the invention may be practiced without these specific details. In other instances, well-known features have not been described in detail to avoid obscuring the invention.

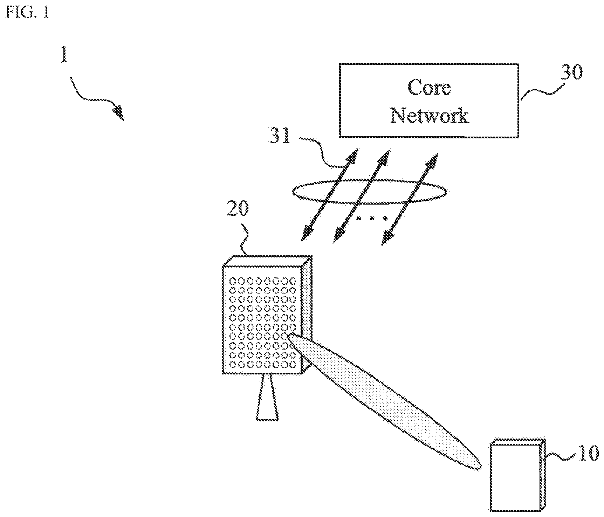

FIG. 1 illustrates a wireless communications system 1 which may be used with a method or system according to one or more embodiments of the present invention. The wireless communication system 1 includes a user equipment (UE) 10, a base station (BS) 20, and a core network 30. The wireless communication system 1 may be a New Radio (NR) system, an LTE/LTE-Advanced (LTE-A) system, or other systems. The wireless communication system 1 is not limited to the specific configurations described herein and may be any type of wireless communication system.

The BS 20 may communicate uplink (UL) and downlink (DL) signals with the UE(s) 10 in a cell 21. The DL and UL signals may include control information and user data. The BS 20 may communicate DL and UL signals with the core network 30 through backhaul links 31. The BS 20 may be gNodeB (gNB) or Evolved NodeB (eNB).

The BS 20 includes one or more antennas, a communication interface to communicate with an adjacent BS 20 (for example, X2 interface), a communication interface to communicate with the core network 30 (for example, S1 interface), and a CPU (Central Processing Unit) such as a processor or a circuit to process transmitted and received signals with the UE 10. Operations of the BS 20 may be implemented by the processor processing or executing data and programs stored in a memory. However, the BS 20 is not limited to the hardware configuration set forth above and may be realized by other appropriate hardware configurations as understood by those of ordinary skill in the art. Numerous BSs 20 may be disposed so as to cover a broader service area of the wireless communication system 1.

The UE 10 may communicate DL and UL signals that include control information and user data with the BS 20. The UE 10 may be a mobile station, a smartphone, a cellular phone, a tablet, a mobile router, or information processing apparatus having a radio communication function such as a wearable device. The wireless communication system 1 may include one or more UEs 10.

The UE 10 includes a CPU such as a processor, a RAM (Random Access Memory), a flash memory, and a radio communication device to transmit/receive radio signals to/from the BS 20 and the UE 10. For example, operations of the UE 10 described below may be implemented by the CPU processing or executing data and programs stored in a memory. However, the UE 10 is not limited to the hardware configuration set forth above and may be configured with, e.g., a circuit to achieve the processing described below.

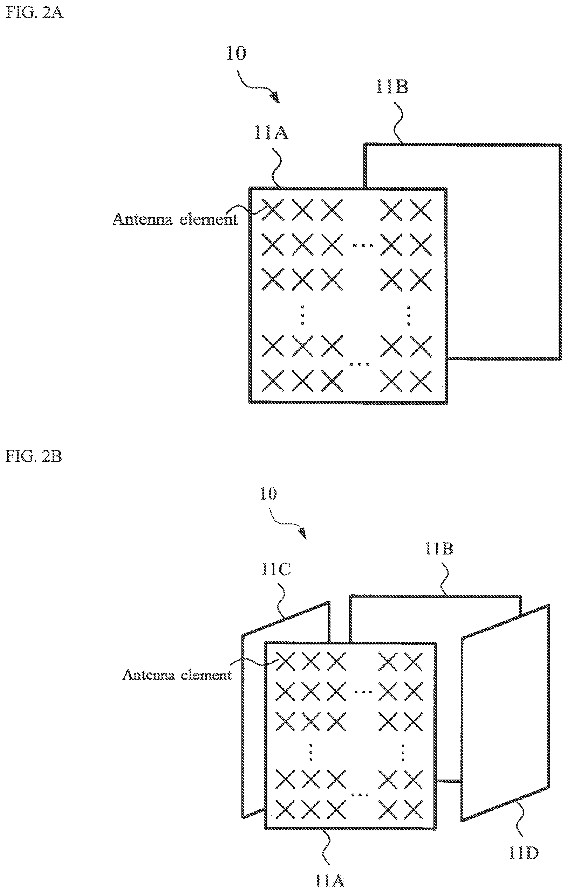

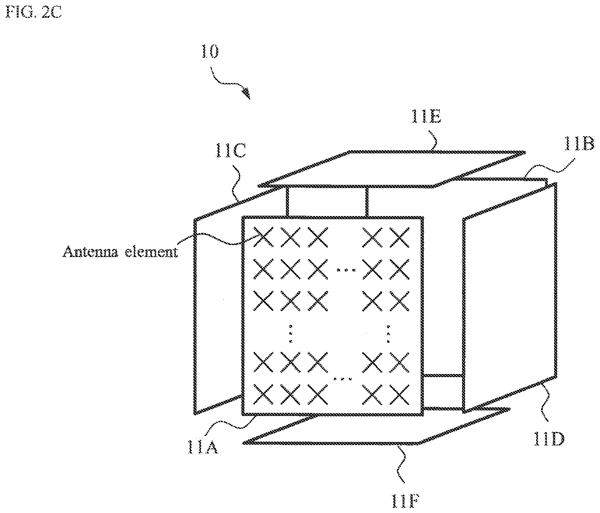

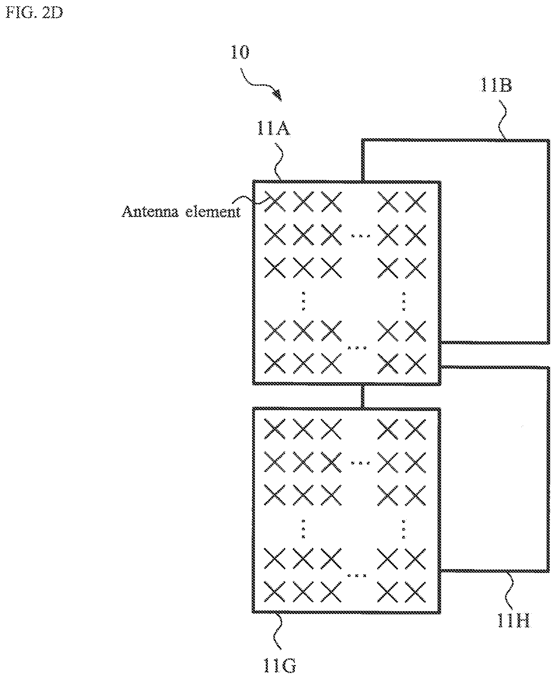

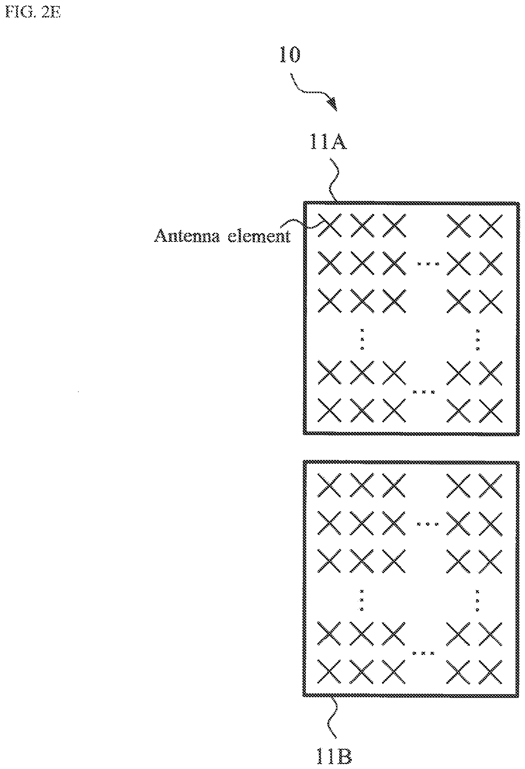

According to one or more embodiments of the present invention, the UE 10 may include multiple transmission resources used for uplink transmission. In one or more embodiments of the present invention, the transmission resource may be referred to as an antenna panel including multiple antennas (antenna ports), a group of antennas (or an antenna), a beam for the uplink transmission, or a combination of multiple antennas ports, the group of multiple antennas, and the beam. For example, in one or more embodiments of the present invention, the transmission resource may be a combination of antenna ports and the beam for the uplink transmission associated with the antenna ports. Each of the transmission resources may have directivity different from each other. FIGs. 2A, 2B, 2C, 2D, and 2E are diagrams showing example deployment configurations of the multiple transmission resources of the UE 10. For example, as shown in FIG. 2A, two transmission resources 11A and 11B may be disposed on a front plane side and a back plane side in the UE 10, respectively. As shown in FIG. 2B, four transmission resources 11A, 11B, 11C, and 11D may be disposed on the front plane side, the back plane side, and both lateral plane sides in the UE 10, respectively. As shown in FIG. 2C, six transmission resources 11A, 11B, 11C, 11D, 11E, and 11F may be disposed on the front plane side, the back plane side, the both lateral plane sides, and both vertical plane sides in the UE 10, respectively. As another example, as shown in FIG. 2D, when the UE 10 includes four transmission resources 11A, 11B, 11G, and 11H, two transmission resources 11A and 11G may be disposed on the front plane side and other transmission resources 11B and 11H may be disposed on the front plane side. As another example, as shown in FIG. 2E, both of the transmission resources 11A and 11B may be disposed in the UE 10 so as to face the same direction. For example, when a user grips the UE 10 such as the smartphone so as to cover a lower side of the UE 10 with a user's hand, the configuration of FIG. 2E may be effective. However, the deployment configuration of the transmission resources 11 of the UE 10 is not limited to the configuration set forth above. Furthermore, the number of the transmission resources 11 of the UE 10 is not limited to two, four, six set for the above and may be more than six. In one or embodiments of the present invention, transmission resources 11A, 11B, 11C, 11D, 11E, and 11F are also referred to transmission resources #1, #2, #3, #4, #5, and #6, respectively.

(PUSCH Transmission)

Physical Uplink Shared Channel (PUSCH) transmission by the UE 10 including multiple transmission resources 11 will be described in detail below in embodiments of first to fifth examples, of which the fifth example is an example in accordance with of the present invention. The remaining examples of PUSCH transmission do not make part of the present invention.

Furthermore, the PUSCH transmission, in accordance with the invention, is used as uplink transmission of an uplink channel or an uplink signal.

(First Example)

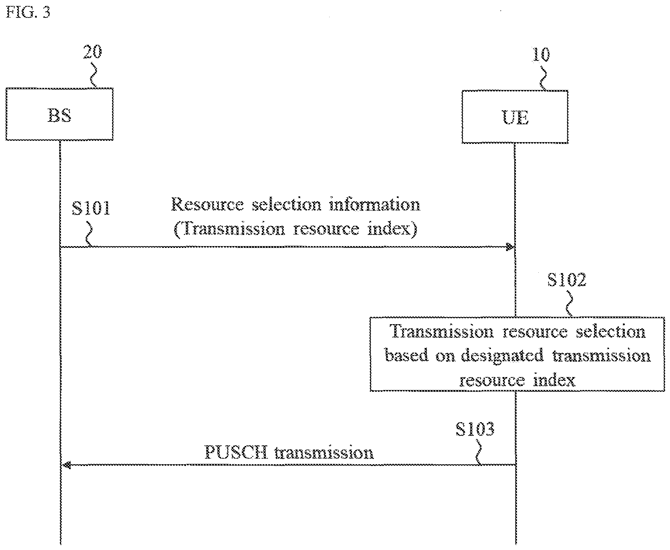

According to one or more embodiments of a first example not making part of the present invention, the BS 20 may designate the transmission resource 11 of the UE 10 used for the PUSCH transmission and notify the UE 10 of the designated transmission resource 11 implicitly and/or explicitly. FIG. 3 is a sequence diagram showing an example operation for the PUSCH transmission according to one or more embodiments of the first example.

As shown in FIG. 3, the BS 20 may transmit resource selection information to the UE 10 (step S101). The resource selection information may include at least one transmission resource index (number) indicating the transmission resource 11 of the UE 10 used for the PUSCH transmission. For example, the resource selection information may include at least one of the transmission resource index, an antenna port related information such as antenna port index or another index designating the transmission resource 11. The resource selection information may be transmitted via at least one of semi-static signaling such as Radio Resource Control (RRC) signaling and dynamic signaling such as signaling using a Downlink control information (DCI) format. For example, the resource selection information may be included in an uplink (UL) grant.

After the UE 10 may receive the resource selection information from the BS 20, the UE 10 may select the transmission resource 11 (transmission resource selection) for the PUSCH transmission based on the transmission resource index of the received transmission resource designation information (step S102). In one or more embodiments, the transmission resource selection may be referred to as transmission resource switching. Then, the UE 10 may transmit the PUSCH from the selected transmission resource 11 to the BS 20 (step S103).

Thus, according to one or more embodiments of the first example, the UE 10 include multiple transmission resources 11. The UE 10 may receive, from the BS 20, the resource selection information that indicates a transmission resource designated by the BS 20. The UE 10 may select a transmission resource used for the PUSCH transmission (uplink transmission) based on the resource selection information. For example, UE 10 may select the transmission resource designated by the BS 20 as the transmission resource used for the PUSCH transmission. The UE 10 may transmit the PUSCH (uplink signal or uplink channel) using the selected transmission resource.

In one or more embodiments of the first example, the resource selection information may indicate a plurality of transmission resources designated by the BS 20. The UE 10 may select the designated plurality of transmission resources as transmission resources for the uplink transmission.

(Modified First Example)

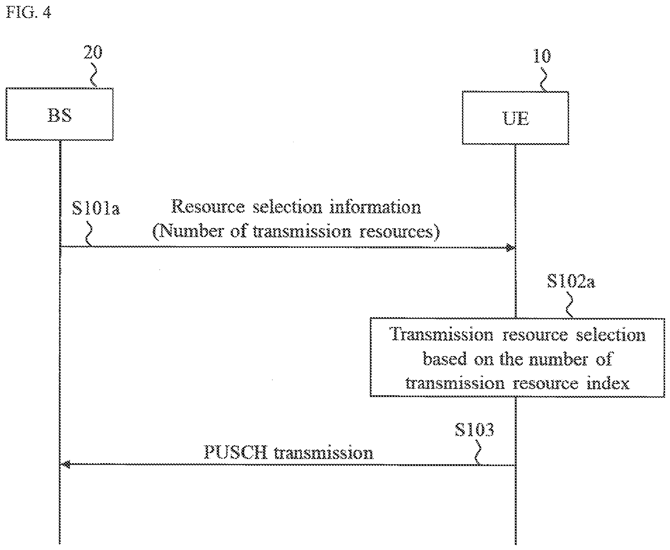

According to one or more embodiments of a first example not making part of the present invention, the BS 20 may designate the number of the transmission resources 11 of the UE 10 used for the PUSCH transmission and notify the UE 10 of the designated the number of the transmission resources 11 implicitly and/or explicitly. FIG. 4 is a sequence diagram showing an example operation for the PUSCH transmission according to one or more embodiments of the modified first example not making part of the present invention. As shown in FIG. 4, the BS 20 may transmit resource selection information including the number of transmission resources 11 used for the PUSCH transmission (S101a). Furthermore, the resource selection information may include the transmission resource index in addition to the number of transmission resources 11.

After the UE 10 may receive the resource selection information from the BS 20, the UE 10 may select the transmission resource 11 for the PUSCH transmission based on the number of the transmission resources of the received resource selection information (step S102a). For example, when the number of the transmission resources is one, the UE 10 may select any one of the transmission resources 11. The step S103 in FIG. 4 is the same as the step S103 in FIG. 3.

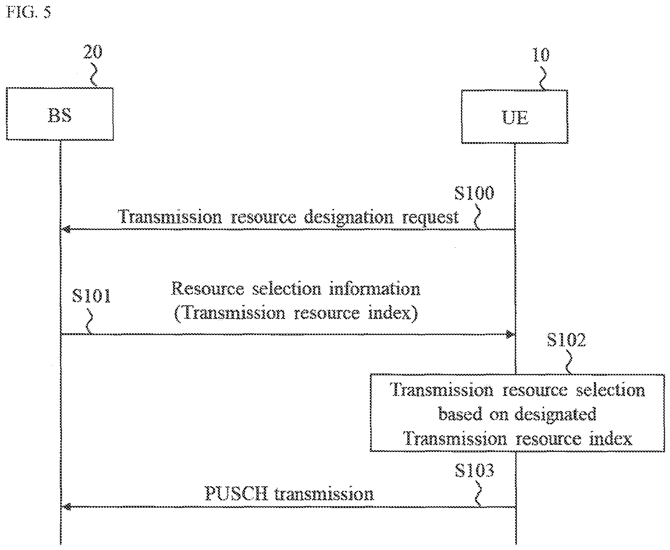

As another example, the BS 20 may transmit the resource selection information based on a transmission resource designation request from the UE 10. As shown in FIG. 5, the UE 10 may transmit the transmission resource designation request to the BS 20. Then, the BS 20 may designate the transmission resource 11 based on the received transmission resource designation request. The steps S101 to S103 in FIG. 5 are the same as the steps S101 to S103 in FIG. 3, respectively. Furthermore, for example, the UE 10 may transmit information regarding the selected transmission resource to the BS 20.

(Second Example)

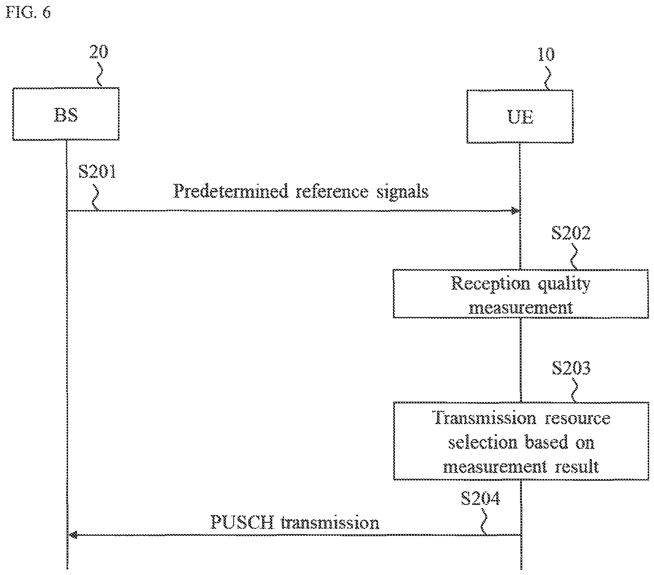

According to one or more embodiments of a second example not making part of the present invention, the UE 10 may determine a transmission resource 11 used for the PUSCH transmission and select, from multiple transmission resources of the UE 10, a transmission resource 11 used for the uplink transmission based on the determined transmission resource 11 (determination in the UE 10). FIG. 6 is a sequence diagram showing an example operation for PUSCH transmission according to one or more embodiments of a second example.

As shown in FIG. 6, the BS 20 may transmit predetermined reference signals to the UE 10 (step S201). For example, the predetermined reference signal may be a Channel State Information Reference Signal (CSI-RS), a dedicated reference signal (DRS), a Cell-specific Reference Signal (CRS). The reference signal may be a newly defined signal.

After the UE 10 may receive the reference signal from the BS 20, the UE 10 may perform reception quality (or path loss) measurements based on the received reference signal (step S202). The reception quality may be a Reference Signal Received Power (RSRP), Received Signal Strength Indicator (RSSI) or other information that reflects channel quality. The UE 10 may select the transmission resource 11 for the PUSCH transmission based on the measurement results (step S203). For example, the UE 10 may select the transmission resource 11 having the highest reception quality (or the smallest path loss). Then, the UE 10 may transmit the PUSCH from the selected transmission resource 11 to the BS 20 (step S204). Furthermore, the BS 20 may notify the UE 10 of transmission power of the downlink reference signal, and then the UE 10 may measure the path loss of the RS using the transmission power. The UE 10 may notify the BS 20 of selected transmission resource information that indicates the selected transmission resource 11 used for the PUSCH transmission (step S 205).

Thus, according to one or more embodiments of the second example, the UE 10 may receive predetermined reference signals from the BS 20 and determine a transmission resource based on reception quality of the received predetermined reference signals. Then, UE 10 may select, from the multiple transmission resources of the UE 10, the determined transmission resource as a transmission resource used for the uplink transmission.

(Modified Second Example)

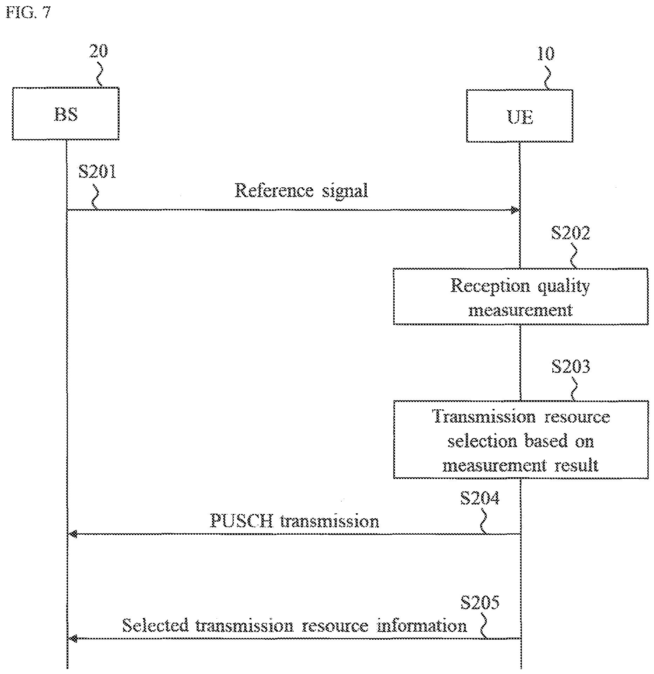

According to one or more embodiments of a modified second example not making part of the present invention, the UE 10 may notify the BS 20 of information indicating the selected transmission resource 11. FIG. 7 is a sequence diagram showing an example operation for the PUSCH transmission according to one or more embodiments of the modified second example of the present invention. The steps S201 to S203 in FIG. 7 are the same as the steps S201 to S203 in FIG. 6, respectively.

As shown in FIG. 7, at the step S203, the UE 10 may select the transmission resource 11. The UE 10 may transmit information indicating the selected transmission resource 11 (selected transmission resource information) to the BS 20 (S205). Furthermore, the UE 10 may transmit the selected transmission resource information before the PUSCH transmission at the step S204.

In one or more embodiments of the modified second example, when the BS 20 may receive the selected transmission resource information from the UE 10, the BS 20 may switch quasi co-location information based on the selected transmission resource information.

(Third Example)

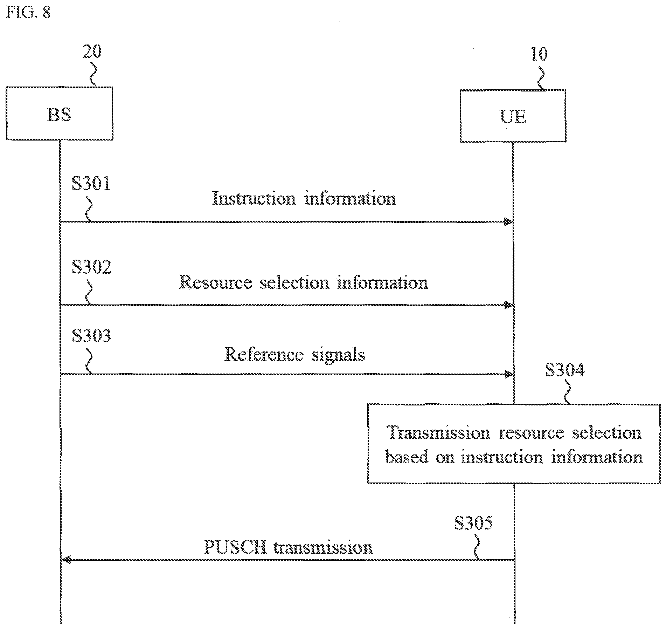

A method according to one or more embodiments of a third example not making part of the present invention may switch between the method for designating the transmission resource 11 by the BS 20 and the method for determining the transmission resource 11 by the UE 10. FIG. 8 is a sequence diagram showing an example operation for the PUSCH transmission according to one or more embodiments of the third example.

As shown in FIG. 8, the BS 20 may transmit instruction information to the UE 10 (step S301). The instruction information may designate whether the resource information used for the uplink transmission is to be selected based on the selection information or the determination in the UE. The instruction information may be transmitted via at least one of the higher layer signaling such as the RRC signaling and DCI.

The BS 20 may transmit, to the UE 10, the resource selection information that indicates the transmission resource index designated by the BS 20 (step S302).

The BS 20 may transmit reference signals to the UE 10 (step S303).

The UE 10 may select the transmission resource 11 for the PUSCH transmission based on the instruction information (step S304).

When the instruction information designates the transmission resource selection based on the resource selection information from the BS, the UE 10 may select the transmission resource 11 for the PUSCH transmission based on the designated transmission resource 11 in the selection information.

On the other hand, when the instruction information designates the transmission resource selection based on determination in the UE 10, the UE 10 may determine a transmission resource using the received reference signals and select the transmission resource 11 for the PUSCH transmission based on the determined transmission resource. For example, the UE 10 may determine the transmission resource based on reception quality (or path loss) of the received reference signals.

Then, the UE 10 may transmit the PUSCH from the selected transmission resource 11 to the BS 20 (step S305).

According to one or more embodiments of the third example, for example, when the number of the transmission resources 11 is two, in the resource selection information, the transmission resource 11A (transmission resource index "1"), the transmission resource 11B (transmission resource index "2"), and the instructions of the transmission resource selection to the UE 10 may be indicated as "00", "01", and "10" using a two-bit field, respectively.

As another example, for example, when the number of the transmission resources 11 is two, the resource selection information may use an one-bit field, and information indicating the transmission resource selection performed by the BS 20 and information indicating the transmission resource selection performed by the UE 10 may be indicated as "0" and "1", respectively.

(Fourth Example)

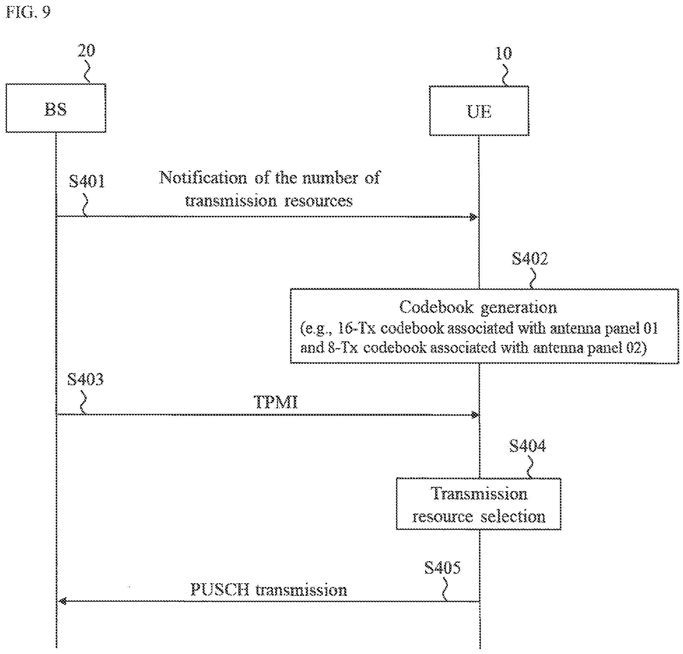

LTE Rel. 13 defines a configurable codebook in downlink Multiple Input Multiple Output (MIMO), which is applicable for various antenna configurations. Specifically, according to the configurable codebook, the UE 10 generate codebooks based on prior information including the number of antenna ports of the BS 20 notified from the BS 20. According to one or more embodiments of a fourth example not making part of the present invention, the UE 10 may generate a codebook based on prior information such as the number of the transmission resources 11 and select the transmission resource 11 using a transmitted precoding matrix indicator (TPMI). FIG. 9 is a sequence diagram showing an example operation for the PUSCH transmission according to one or more embodiments of the fourth example.

As shown in FIG. 9, the BS 20 may transmit a notification of the number of the transmission resource 11 (step S401). Then, the UE 10 may generate the codebook based on the number of the transmission resources 11 (step S402). For example, the transmission resource 11A (transmission resource index "1") and the transmission resource 11B (transmission resource index "2") may be associated with a 16-Tx codebook and an 8-Tx codebook, respectively. Implementation examples of the codebook will be described below in detail. For example, different transmission resources 11 may be associated with identical prior information.

The BS 20 may transmit the TPMI or some other signal to achieve the transmission resource selection that implicitly indicates designation of the transmission resource 11 for the PUSCH transmission to the UE 10 (step S403). That is, the TPMI may include the resource selection information that indicates a transmission resource designated by the BS 20.

After the UE 10 may receive the TPMI or some other signal to achieve the transmission resource selection from the BS 20, the UE 10 may select the transmission resource 11 based on the received PMI and the generated codebook (step S404). Then, the UE 10 may transmit the PUSCH from the selected transmission resource 11 to the BS 20 (step S405).

The codebook according to one or more embodiments of the fourth example may be implemented as follows.

(First Implementation Example of Codebook)

$$y = HW_f x + n$$

$$W_f = W_p \otimes S$$

y: Rx signal, H: Channel matrix, Wf: Precoder, x: Tx signal, n: noise,
Wp: Precoder per transmission resource, S: Transmission resource switching vector

Furthermore, Kronecker product may be used in the above first implementation example of the codebook.

S is a row vector with a length of the number of the transmission resources, in which the element in the selected transmission resource is 1 and the other elements are 0.

Non-zero elements for S can be multiple. Total power among the transmission resource can be constant (power per transmission resource can be scaled in order to maintain total transmit power).

S is a row vector with a length of the number of the transmission resources, in which sigma (Si2) =1, where Si is i-th element of the vector S.

S is a row vector with a length of the number of the transmission resources, in which the element in the selected transmission resource is 1/(sqrt(N)) and the other elements are 0 (N is the number of selected transmission resources).

(Second Implementation Example of Codebook)

$$W_f = \sum_{i=0}^{P-1} W_p^i \otimes S_i$$

The second implementation example of the codebook may be used when the precoder is changed per transmission resource. Furthermore, Kronecker product may be used in the above second implementation example of the codebook.

P is the number of transmission resources.

Wpi is the precoder for i-th transmission resource (zero matrix for non-selected transmission resource).

Si can be a row vector with the length of the number of the transmission resources.

For the selected transmission resource, the i-th element is non-zero and the other elements are 0.

Sigma(Sij) = 1, where Sij is j-th element of Si

Non-zero element can be 1/(sqrt(N))
For non-selected transmission resource, all the elements are 0.

(Fifth Example)

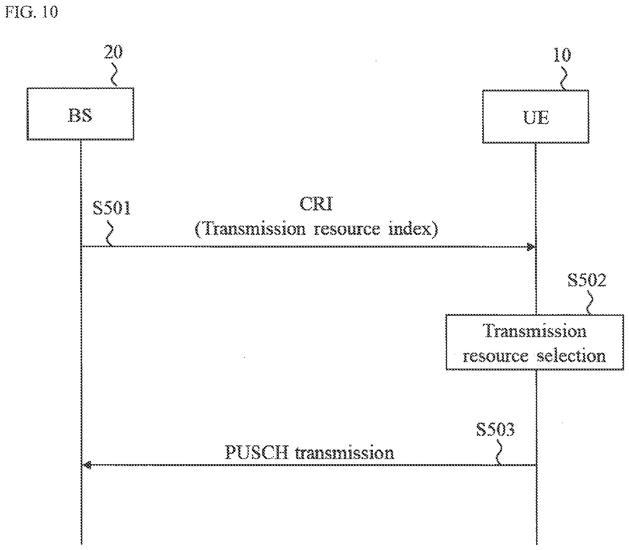

According to one or more embodiments of a fifth example, in accordance with the present invention, the UE 10 selects the transmission resources 11 based on a CSI-RS resource indicator (CRI). FIG. 10 is a sequence diagram showing an example operation for the PUSCH transmission according to the fifth example of the present invention. The CRI is called SRS resource indicator (SRI).

As shown in FIG. 10, the BS 20 transmits the CRI to the UE 10 (step S501). According to the fifth example of the present invention, the CRI includes information indicating the transmission resource index designated by the BS 20.

After the UE 10 receives the CRI from the BS 20, the UE 10 selects the transmission resource 11 for the PUSCH transmission based on the transmission resource index of the CRI (step S502). Then, the UE 10 transmits the PUSCH from the selected transmission resource 11 to the BS 20 (step S503).

Furthermore, the BS 20 may calculate and transmit all or part of a Rank Indicator (RI), a Precoding Matrix Indicator (PMI), and a Channel Quality Indicator (CQI) based on the selected transmission resource 11, e.g., selected CRI.

(Another Example of First Example)

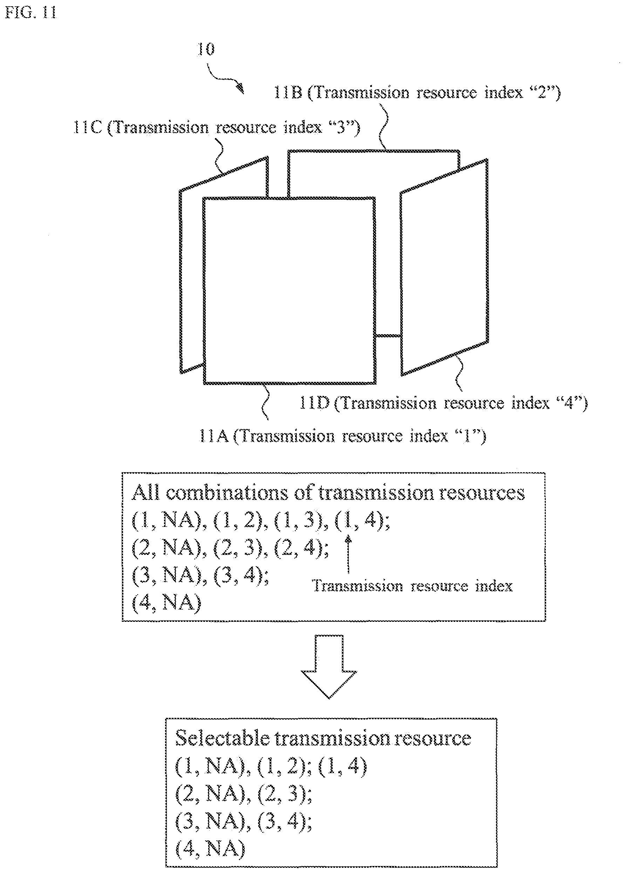

As another example not making part of the present invention, the transmission resources 11 designated by the BS 20 may be limited. As shown in FIG. 11, for example, the UE 10 may include four transmission resources 11A to 11D (transmission resource index "1" to "4"). When one or two transmission resources 11 are selected for the PUSCH transmission, there are 10 combinations of the transmission resources at most. However, according to one or more embodiments of another example, the selectable combinations of the transmission resources 11 may be limited so that there are 8 combinations as shown in FIG. 11. In such a case, for example, the BS 20 may transmit the one or two transmission resource indexes designated form the above 8 combinations. For example, the BS 20 may transmit the transmission resource indexes of the above 8 combinations. Furthermore, the selectable combinations is not limited to 8 combinations as shown in FIG. 11 but may be predetermined combinations.

As another example, the transmission resource selection may be performed independently for each physical channel or signal, or commonly for each physical channel or signal. Furthermore, the transmission resource selection may be performed independently between an uplink and a downlink, or commonly between the uplink and the downlink.

As another example, the transmission resources 11 designated by the BS 20 or selected by the UE 10 may be identical in all frequency bands or a sub band unit.

(SRS Transmission)

A Sounding Reference Signal (SRS) transmission by the UE 10 including multiple transmission resources 11 will be described in detail below in embodiments of a sixth example 2. not making part of the present invention.

(Sixth Example)

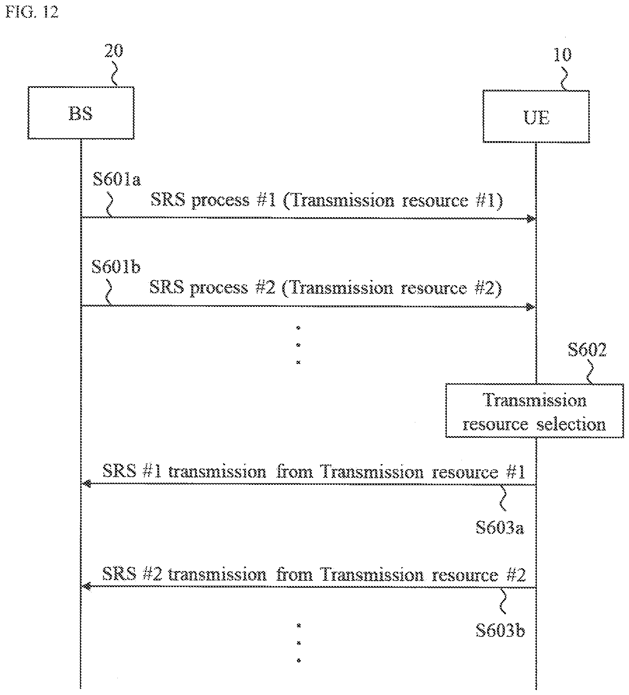

According to one or more embodiments of a sixth example not making part of the present invention, the UE 10 may transmit each of the multiple SRSs. In one or more embodiments of the sixth example, multiple SRS processes (or SRS resources) may be configured for the SRS transmission, like downlink CSI processes. FIG. 12 is a sequence diagram showing an example operation for the SRS transmission according to one or more embodiments of the sixth example.

For example, SRS parameters in the SRS process (SRS resource configuration information) include Cell-specific SRS parameters and UE-specific SRS parameters.

The Cell-specific SRS parameters may be transmitted using a broadcast channel or other control channels. The Cell-specific SRS parameters include "srs-SubframeConfig" and "srs-BandwidthConfig". "srs-SubframeConfig" indicates a subframe(s) in which the SRS is able to be transmitted. "srs-BandwidthConfig" indicates a configuration of a bandwidth of the SRS transmission.

The UE-specific SRS parameters may be transmitted using the RRC signaling. The UE-specific SRS parameters may be configured independently from periodic SRS transmission. The UE-specific SRS parameters include "srs-ConfigIndexAp," "srs-BandwidthAp," "freqDomainPositionAp," "cyclicShiftAp," "transmissionCombAp," and "srs-AntennaPortAp." "srs-ConfigIndexAp" indicates transmission timing of the UE-specific SRS. "srs-BandwidthAp" indicates a bandwidth of the SRS transmission. "freqDomainPositionAp" indicates a frequency location of the SRS. "cyclicShiftAp" and "transmissionCombAp" may be used for multiple antennas multiplexing. "srs-AntennaPortAp" indicates the number of antenna ports of the SRS transmission.

As shown in FIG. 12, the BS 20 may transmit multiple SRS processes (e.g., SRS processes #1 and #2) to the UE 10 (steps S601a and 601b). Each SRS process may be associated with each of the transmission resources 11 designated by the BS 20. For example, the SRS processes #1 and #2 may be associated with the transmission resource #1 and #2, respectively. Furthermore, according to one or more embodiments not making part of the present invention, the number of SRS processes is not limited to two but may be more than at least one. Furthermore, the BS 20 may transmit SRS resource configuration information that indicates multiple SRS resources to the UE 10.

After the UE 10 may receive the multiple SRS processes from the BS 20, the UE 10 may select the transmission resource 11 for each SRS transmission based on the SRS processes (step S602). For example, the UE 10 may select the transmission resource 11 associated with the transmission resource #1 for the SRS transmission corresponding to the SRS process #1 (SRS #1 transmission). The UE 10 may select the transmission resource 11 associated with the transmission resource #2 for the SRS transmission corresponding to the SRS process #2 (SRS #2 transmission).

Then, the UE 10 may transmit the SRS #1 and #2 from the selected transmission resources 11 associated with the transmission resource #1 and #2 to the BS 20, respectively (steps S603a and S603b).

Furthermore, for example, according to one or more embodiments of the sixth example, the SRS process may be identical between the uplink and the downlink or different between the uplink and the downlink independently.

Furthermore, for example, according to one or more embodiments of the sixth example, the number of the configurable SRS processes may be limited. For example, the number of the configurable SRS processes may be limited to be equal to and less than a predetermined upper limit value such as 1, 2, 3, 4, 5, 6, 7, 8, 9, 10, and 16.

Furthermore, for example, according to one or more embodiments of the sixth example, groups of antenna ports included in a single SRS process may be grouped in the transmission resources 11. For example, an antenna port group #1 consist of antenna ports 1-4 may be associated with the transmission resource 11A (transmission resource index "1") and an antenna port group #2 consist of antenna ports 5-8 may be associated with the transmission resource 11B (transmission resource index "2"). Furthermore, for example, the UE 10 (or the BS 20) may notify the BS 20 (or the UE 10) of the number of antenna port groups.

(Modified Sixth Example)

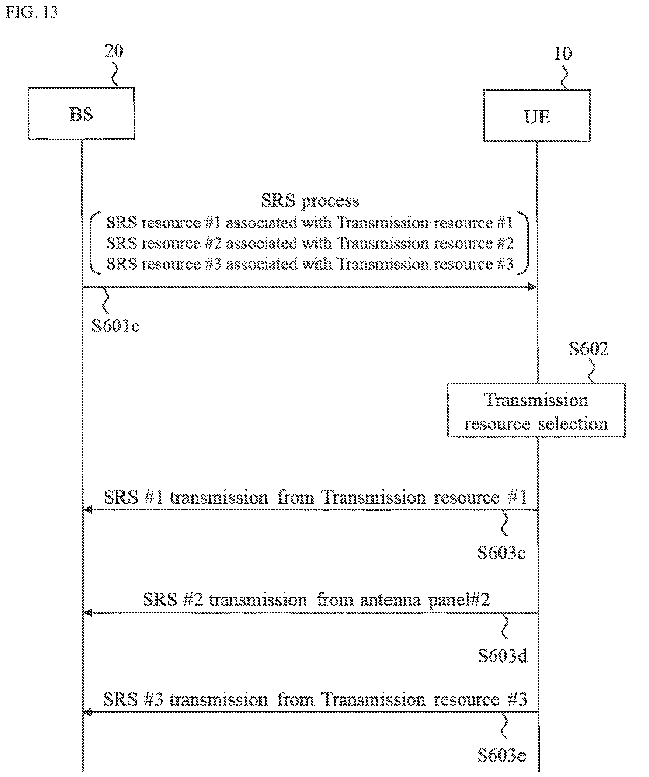

According to one or more embodiments of a modified sixth example not making part of the present invention, like downlink enhanced MIMO (eMIMO)-Type B CSI-RS, a SRS process includes multiple SRS resources, each of which is associated with the transmission resources 11 designated for the SRS transmission. FIG. 13 is a sequence diagram showing an example operation for the SRS transmission according to one or more embodiments of the modified sixth example.

As shown in FIG. 13, the BS 20 may transmit the SRS process including multiple SRS resources (e.g., SRS resources #1, #2, and #3) to the UE 10 (steps S601c). Each SRS resource may be associated with each of the transmission resources 11 designated by the BS 20. For example, the SRS resources #1, #2, and #3 may be associated with the transmission resource #1, #2, and #3, respectively. Furthermore, according to one or more embodiments not making part of the present invention, the number of SRS resources included in the SRS process is not limited to three but may be more than at least one.

After the UE 10 may receive the SRS process include the multiple SRS resources from the BS 20, the UE 10 may select the transmission resource 11 for each SRS transmission based on the multiple SRS resources (steps S602). For example, the UE 10 may select the transmission resource 11 associated with the transmission resource #1, #2, and #3 for the SRS transmission corresponding to the SRS resources #1, #2, and #3 (SRSs #1, #2, and #3 transmission), respectively.

Then, the UE 10 may transmit the SRS #1, #2, and #3 from the selected transmission resources #1, #2, and #3 to the BS 20, respectively (steps S603c, S603d, and S603e).

Furthermore, one or more transmission resources (referred to as main transmission resource as below) (e.g., the selected transmission resource 11) may require sounding with high accuracy. For example, the main transmission resource may be at least a predetermined transmission resource 11. As another example, according to one or more embodiments of a modified sixth example, transmission periodicity and a transmission frequency band of the SRS transmission may be configured for each transmission resource 11. For example, the transmission periodicity and the transmission frequency band of the SRS transmission may be configured for each SRS configuration (SRS process) or each antenna port group. For example, the transmission periodicity from the main transmission resource may be shorter than the transmission periodicity from other transmission resources. For example, the transmission frequency band from the main transmission resource may be a broader frequency band than the transmission frequency band from other transmission resources. Furthermore, when the transmission resource 11 used as the main transmission resource is switched, the transmission periodicity, the frequency band, and a multiplexed way for the switched main transmission resource may be changed.

As another example, according to one or more embodiments of the modified sixth example, when an aperiodic SRS is transmitted, the transmission resource 11 may be selected based on the transmission resource 11 designated by the BS 20. As another example, the aperiodic SRS may be transmitted from only the main transmission resource (one or more selected transmission resources 11). As another example, for example, when the aperiodic SRS is transmitted for a switch of the transmission resource 11, a periodic SRS may be transmitted from sub transmission resources, which are transmission resources 11 other than the main transmission resource.

(PUCCH Transmission)

(Seventh Example)

The transmission resource selection for Physical Uplink Control Channel (PUCCH) transmission according to one or more embodiments of a seventh example not making part of the present invention will be described below. According to one or more embodiments of the seventh example, the transmission resource 11 for the PUCCH transmission selected by the UE 10 may be the same as transmission resource 11 selected for other physical channels and/or signals. For example, the transmission resource 11 for the PUCCH transmission selected by the UE 10 may be the same as transmission resource 11 selected for the PUSCH transmission.

As another example of the transmission resource selection for PUCCH transmission, according to one or more embodiments of the seventh example, the transmission resource 11 having the best reception quality or the smallest path loss may be selected as the transmission resource 11 for the PUCCH transmission.

(PRACH Transmission)

(Eighth Example)

The transmission resource selection for Physical Random Access Channel (PRACH) transmission according to one or more embodiments of an eighth example not making part of the present invention will be described below. According to one or more embodiments of the eighth example, the transmission resource 11 for the PRACH transmission selected by the UE 10 may be the same as transmission resource 11 selected for other physical channels and/or signals. For example, the transmission resource 11 for the PRACH transmission selected by the UE 10 may be the same as transmission resource 11 selected for the PUSCH (or PUCCH) transmission.

For example, when initial access or transmitting and receiving a UE-specific signal in a random access procedure are performed with a certain absence, the BS 20 cannot designate the transmission resource 11 of the UE 10 properly. Therefore, as another example of the transmission resource selection for PRACH transmission, the UE 10 may autonomously select the transmission resource 11. For example, the UE 10 may select the transmission resource 11 for the PRACH transmission based on the path loss or the reception quality (e.g., RSRP and RSRQ) of the downlink signals. Furthermore, the UE 10 may select the transmission resource 11 for the PRACH transmission autonomously based on a predetermined condition such that an idle period is longer than a predetermined period.

As another example of the transmission resource selection for PRACH transmission, according to one or more embodiments of the eighth example, the transmission resource 11 may be switched during PRACH transmission period so as to provide a high diversity gain.

As another example of the transmission resource selection for PUCCH transmission, according to one or more embodiments of the eighth example, the PRACH may be simultaneously transmitted from the multiple transmission resources 11 during a single PRACH transmission period so as to provide the high diversity gain.

(DM-RS Transmission)

(Ninth Example)

The transmission resource selection for Demodulation Reference Signal (DM-RS) transmission according to one or more embodiments of a ninth example not making part of the present invention will be described below. According to one or more embodiments of the ninth example, the transmission resource 11 for the DM-RS transmission selected by the UE 10 may be the same as transmission resource 11 selected for other physical channels and signals. For example, the transmission resource 11 for the PUCCH transmission selected by the UE 10 may be the same as transmission resource 11 selected for the PUSCH (or PUCCH) transmission. This can be referred to as a quasi co-location information. In this sense, the UE 10 can assume DM-RS is quasi co-located with associated PUSCH (or PUCCH).

(Another Example of Transmission resource Selection for Uplink Channel Transmission)

As another example of the above transmission resource selection for the PUSCH, SRS, PUCCH, PRACH, and DM-RS transmission, according to one or more embodiments of the present invention, which refers to the PUSCH transmission, the UE 10 may notify the BS 20 of the number of the transmission resources 11 of the UE 10.

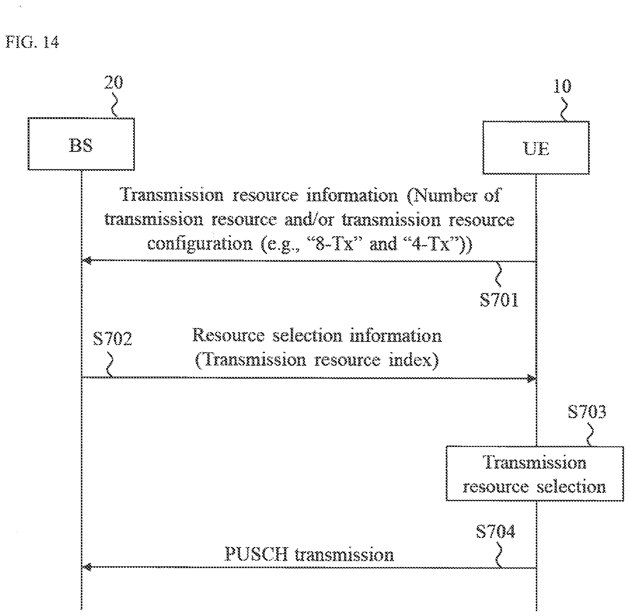

As shown in FIG. 14, the UE 10 transmits transmission resource information that indicates a configuration of each of the multiple transmission resources 11 to the BS 20 (step S701). The transmission resource information may include the number of the transmission resource 11 of the UE 10. The transmission resource information includes the number of the transmission resources which are simultaneously able to transmit signals. The transmission resource information may include the number of transmission resources which are simultaneously able to receive signals and an antenna configuration of the transmission resource 11. The transmission resource information is transmitted as UE capability information. The transmission resource information includes the number of Transceiver units (TXRUs), the number of streams, and a transport block size. The number of TXRUs, the number of streams, and a transport block size are for each transmission resource 11. The transmission resource index may be assigned to each transmission resource 11. For example, the transmission resource information may indicate the number of transmission resources available in the UE 10.

The BS 20 may designate the transmission resource 11 based on the transmission resource information. Then, the BS 20 transmits the resource selection information including the transmission resource index to the BS 20 (step S702).

After the UE 10 receives the resource selection information from the BS 20, the UE 10 selects the transmission resource 11 for the PUSCH transmission based on the transmission resource index of the received resource selection information (step S703). For example, the number of the transmission resources designated by the BS may be less than or equal to the number of the transmission resources available in the UE 10. Then, the UE 10 transmits the PUSCH (or, according to examples not making part of the present invention SRS, PUCCH, PRACH, or DM-RS) from the selected transmission resource 11 to the BS 20 (step S704).

Furthermore, the antenna configuration of the transmission resource 11 may be for each transmission resource 11. For example, the antenna configuration may be indicated as 8-Tx and 4-Tx, which mean the UE 10 includes two transmission resources 11 consist of the 8-Tx transmission resource and the 4-Tx transmission resource. For example, the antenna configuration of the transmission resource 11 may include all or part of the number of the planer (vertical/horizontal) antennas and polarized antennas for each transmission resource 11. For example, the antenna configuration may be transmitted from the UE 10 to the BS 20 as the applied codebook. Furthermore, the antenna configurations of the multiple transmission resources 11 may be assumed as identical in the BS 20.

Furthermore, the number of the transmission resources 11 which can be transmitted by the UE 10 may be limited. For example, when the UE 10 includes 16 transmission resources, the UE may select the number of the transmission resources 11 among predetermined candidates: e.g., (1, 2), (1, 2, 3, 4), (1, 2, 4, 6), (1, 2, ... , 5, 6), (1, 2, ... , 7, 8), (1, 2, 3, 4, 6, 8, 12, 16), (1, 2, 3, 4, ... , 15, 16) for the notification to the BS 20.

(Transmit Power Control)

(Tenth Example)

According to one or more embodiments of a tenth example not making part of the present invention, the UE 10 may independently perform transmit power control (TPC) for each transmission resource 11. For example, the UE 10 may perform different open loop TPC (for example, path loss estimation) for each transmission resource 11. For example, the UE 10 may perform different closed loop TPC for each transmission resource 11. For example, the UE 10 may transmit different parameters for the TPC (e.g., Pcmax, P0, alpha, and DTF in LTE) for each transmission resource 11.

(Modified Tenth Example)

According to one or more embodiments of a modified tenth example not making part of the present invention, the transmission resources 11 to which the TPC is applied may be limited for reduction of signaling overheads. For example, the TPC (for example, the closed loop TPC) may be applied for at least a predetermine transmission resource 11 selected by the UE 10 or designated by the BS 20. As another example, the TPC may be performed using the predetermined transmission resource 11 as a reference.

According to one or more embodiments of a modified tenth example not making part of the present invention, when the transmission resource 11 is switched (selected), an offset value of existing closed loop TPC may be reset or taken over. The BS 20 may designate whether closed loop TPC is reset or taken over.

According to one or more embodiments of a modified tenth example not making part of the present invention, when the transmission resource 11 is switched (selected), existing transmit power may be reused. For example, closed loop TPC information (e.g., the offset value of the closed loop TPC) may be recalculated based on the existing transmit power.

(Transmit Power Control for SRS Transmission)

(Eleventh Example)

When channel quality of the different transmission resources 11 are fairly compared, it may be required that transmit power for the SRS transmission from the transmission resources 11 is the same (or a relative power difference between each transmission resource 11 is acknowledged). In such a case, for example, it may be required to avoid error propagation caused by accumulation-type control. According to one or more embodiments of an eleventh example not making part of the present invention, the UE 10 may set the transmit power for the SRS transmission from the multiple transmission resources 11 to be identical. As another example, the UE 10 may differentiate the transmit power for the SRS transmission from the multiple transmission resources 11 relatively. For example, the difference of the transmit power may be transmitted from the UE 10 to the BS 20. As another example, the UE 10 may notify the BS 20 of an absolute value of the transmit power for the SRS transmission.

(Modified Eleventh Example)

According to one or more embodiments of a modified eleventh example not making part of the present invention, the UE 10 may determine the transmit power for the SRS transmission from the transmission resources relatively based on the transmit power for the PUSCH transmission. For example, the UE 10 may determine the transmit power for the SRS transmission from each transmission resources 11 based on a relative value to the transmit power for the PUSCH transmission from each transmission resources 11. For example, the UE 10 may determine the transmit power for the SRS transmission from the selected transmission resource 11 based on the transmit power for the PUSCH transmission from the selected transmission resource 11.

(Transmit Power Control for PRACH Transmission)

(Twelfth Example)

According to one or more embodiments of a twelfth example not making part of the present invention, when the UE 10 may perform the TPC for the PRACH transmission, the TPC may apply to each transmission resource 11 independently.

(Modified Eleventh Example)

According to one or more embodiments of a modified twelfth example not making part of the present invention, when the UE 10 may perform the TPC for the PRACH transmission, the TPC may commonly apply to the switched transmission resources 11. For example, when the UE 10 select (switch) the transmission resource 11 for the PRACH transmission (e.g., when the transmission resource (index) "1" is switched to the transmission resource (index) "2" and then the transmission resource (index) "2" is switched to the transmission resource (index) "1"), the common ramp up control may apply to the transmission resource (index) "1" and the transmission resource (index) "2." As another example, the transmit power may be ramped up so that the transmit power of the transmission resource (index) "1" is x, the transmit power of the transmission resource (index) "2" is x + k, the transmit power of the transmission resource (index) "1" is x + 2k, and the transmit power of the transmission resource (index) "2" is x + 3k. Otherwise, for example, the transmit power may be ramped up so that the transmit power of the transmission resource (index) "1" is x, the transmit power of the transmission resource (index) "2" is x, the transmit power of the transmission resource (index) "1" is x + k, and the transmit power of the transmission resource (index) "2" is x + k. Here, the transmit power presented above can be presented in dB.

The transmit power for the PRACH transmission may be indicated as the following formula:

$$P_{PRACH}(dB) = x + k(n-1)$$

n is the number of PRACH transmission attempts. N is the number of the transmission resources of the UE. x is initial transmit power. k is a predetermined coefficient.

As another example, the transmit power for the PRACH transmission may be indicated as the following formula:

$$P_{PRACH}(dB) = x + k\lceil (n-1)/N \rceil$$

According to one or more embodiments not making part of the present invention, the initial transmit power x may be determined based on the path loss or the reception quality (e.g., RSRP and RSRQ) of the downlink signals in all or part of the multiple transmission resources 11. For example, the part of the multiple antennas 11 may be consist of the m transmission resources which have the higher reception quality. For example, the reception quality may be an average value of the reception quality in the multiple transmission resources 11.

As another example, according to one or more embodiments not making part of the present invention, the initial transmit power x may be determined based on the path loss or the reception quality of the downlink signals in one of the multiple transmission resource 11. For example, the transmission resource 11 used for determination of the initial transmit power x may be the transmission resource 11 having the smallest path loss.

(Transmission Timing Control)

(Thirteenth Example)

According to one or more embodiments of a thirteenth example not making part of the present invention, the UE 10 may perform different transmission timing control for each transmission resource 11. For example, the UE 10 may independently perform timing advance control for each transmission resource 11. As another example, the UE 10 may apply the simultaneous transmission timing to all or part of the transmission resources 11.

(Another Example of Transmit Power Control and Transmission Timing Control)

For example, when radiation directions of the multiple transmission resources 11 are the same (or almost the same), the common TPC and transmission timing control may be applied to all or part of the transmission resources 11. As another example, multiple transmission resources 11 (or antenna group) may be grouped. For example, a timing advance group associated with at least an transmission resource 11 may be defined. For example, multiple transmission resources 11 (or antenna group) may be grouped. For example, a TPC group associated with at least a transmission resource 11 may be defined. For example, each TPC group may apply the same TPC and each timing advance group may apply the same timing advance control.

As another example, a common transmission resource 11 may be used for a plurality of physical channels and signals. As another example, the common transmission resource 11 may be used for the uplink and the downlink transmission. As another example, the transmission resource selection may be performed based on the CSI or Radio Resource Management (RRM) measurements.

(Configuration of Base Station)

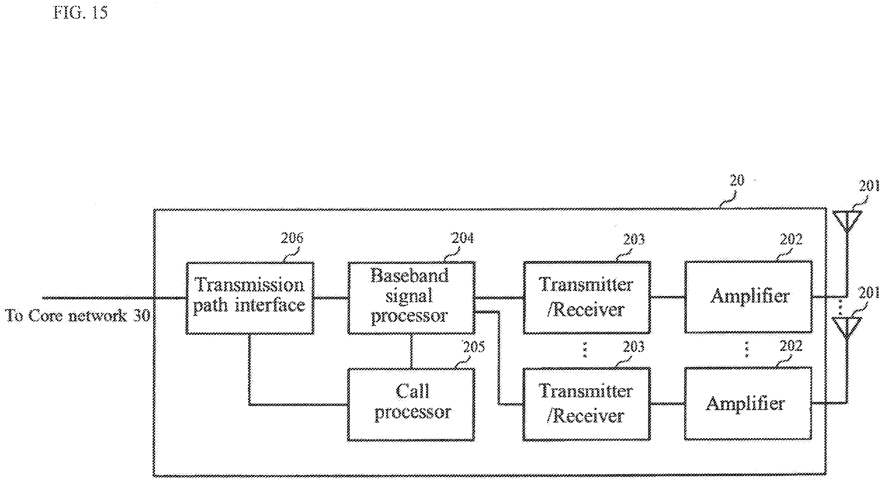

The BS 20 according to one or more embodiments of the present invention will be described below with reference to FIG. 15. FIG. 15 is a diagram illustrating a schematic configuration of the BS 20 according to one or more embodiments of the present invention. The BS 20 may include a plurality of antennas 201, amplifier 202, transceiver (transmitter/receiver) 203, a baseband signal processor 204, a call processor 205 and a transmission path interface 206.

User data that is transmitted on the DL from the BS 20 to the UE 20 is input from the core network 30, through the transmission path interface 206, into the baseband signal processor 204.

In the baseband signal processor 204, signals are subjected to Packet Data Convergence Protocol (PDCP) layer processing, Radio Link Control (RLC) layer transmission processing such as division and coupling of user data and RLC retransmission control transmission processing, Medium Access Control (MAC) retransmission control, including, for example, HARQ transmission processing, scheduling, transport format selection, channel coding, inverse fast Fourier transform (IFFT) processing, and precoding processing. Then, the resultant signals are transferred to each transceiver 203. As for signals of the DL control channel, transmission processing is performed, including channel coding and inverse fast Fourier transform, and the resultant signals are transmitted to each transceiver 203.

The baseband signal processor 204 notifies each UE 10 of control information (system information) for communication in the cell by higher layer signaling (e.g., RRC signaling and broadcast channel). Information for communication in the cell includes, for example, UL or DL system bandwidth.

In each transceiver 203, baseband signals that are precoded per antenna and output from the baseband signal processor 204 are subjected to frequency conversion processing into a radio frequency band. The amplifier 202 amplifies the radio frequency signals having been subjected to frequency conversion, and the resultant signals are transmitted from the antennas 201.

As for data to be transmitted on the UL from the UE 10 to the BS 20, radio frequency signals are received in each antennas 201, amplified in the amplifier 202, subjected to frequency conversion and converted into baseband signals in the transceiver 203, and are input to the baseband signal processor 204.

The baseband signal processor 204 performs FFT processing, IDFT processing, error correction decoding, MAC retransmission control reception processing, and RLC layer and PDCP layer reception processing on the user data included in the received baseband signals. Then, the resultant signals are transferred to the core network 30 through the transmission path interface 206. The call processor 205 performs call processing such as setting up and releasing a communication channel, manages the state of the BS 20, and manages the radio resources.

(Configuration of User Equipment)

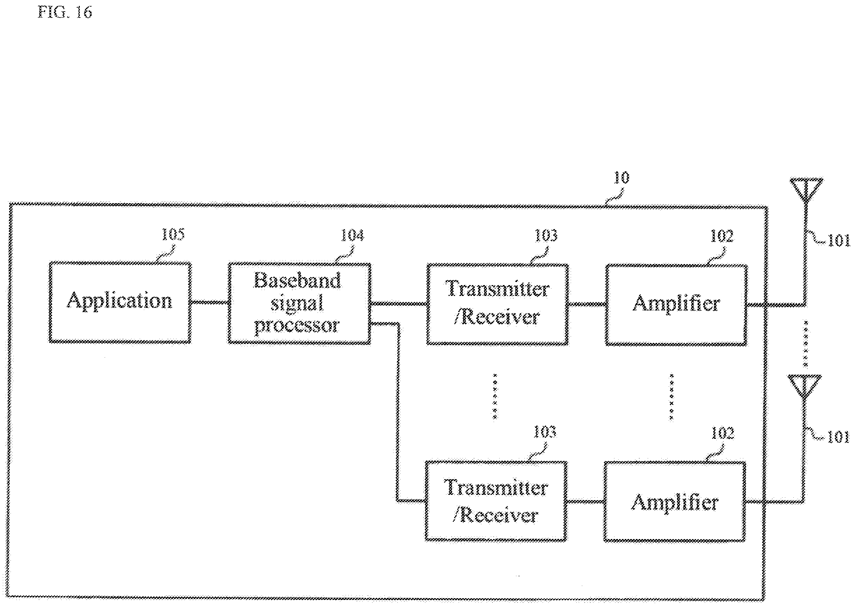

The UE 10 according to one or more embodiments of the present invention will be described below with reference to FIG. 16 FIG. 16 is a schematic configuration of the UE 10 according to one or more embodiments of the present invention. The UE 10 has a plurality of UE antennas 101, amplifiers 102, transceiver (transmitter/receiver) 103, a baseband signal processor 104, and an application 105.

As for DL, radio frequency signals received in the UE antennas 101 are amplified in the respective amplifiers 102, and subjected to frequency conversion into baseband signals in the transceiver (transmitter/receiver) 103. These baseband signals are subjected to reception processing such as FFT processing, error correction decoding and retransmission control and so on, in the baseband signal processor 104. The DL user data is transferred to the application 105. The application 105 performs processing related to higher layers above the physical layer and the MAC layer. In the downlink data, broadcast information is also transferred to the application 105.

On the other hand, UL user data is input from the application 105 to the baseband signal processor 104. In the baseband signal processor 104, retransmission control (Hybrid ARQ) transmission processing, channel coding, precoding, DFT processing, IFFT processing and so on are performed, and the resultant signals are transferred to each transceiver 103. In the transceiver 103, the baseband signals output from the baseband signal processor 104 are converted into a radio frequency band. After that, the frequency-converted radio frequency signals are amplified in the amplifier 102, and then, transmitted from the antenna 101.

In one or more embodiments of the present invention, the transmission resource may be replaced with an antenna group or another concept such as another antenna dimension (e.g., N3) in addition to the number of the vertical, horizontal, and polarized antennas. In one or more embodiments of the present invention, an index to group a plurality of antenna ports (for each transmission resource) may be introduced.

Although the present disclosure mainly described examples of uplink transmission, the present invention is not limited thereto. One or more embodiments of the present invention may apply to downlink transmission. Furthermore, one or more embodiments of the present invention may apply to methods for transmitting and receiving signals. For example, a method of the transmission resource selection in the UE may apply to a method of an antenna (or transmission resource) selection in the BS.

One or more embodiments of the present invention may be used for each of the uplink and the downlink independently. One or more embodiments of the present invention may be also used for both of the uplink and the downlink in common. For example, the transmission resource selection may be performed for each of the uplink and the downlink independently or for both of the uplink and the downlink in common.

One or more embodiments of the present invention may be used for each physical channel (or physical signal) independently. One or more embodiments of the present invention may be also used for a plurality of physical channels (or physical signals) in common. For example, the transmission resource selection may be performed for each physical channel (or physical signal) independently or for a plurality of physical channels (or physical signals) in common.

Although the present disclosure mainly described examples of physical channels and physical signals such as the PUSCH, the SRS, the PUCCH, the PRACH, and the DM-RS, the present invention is limited to PUSCH.

Although the present disclosure mainly described examples of a channel and signaling scheme based on LTE/LTE-A, the present invention is not limited thereto. One or more embodiments of the present invention may apply to another channel and signaling scheme having the same functions as LTE/LTE-A, New Radio (NR), and a newly defined channel and signaling scheme.

Although the present disclosure mainly described examples of the UE including planer antennas, the present invention is not limited thereto. One or more embodiments of the present invention may also apply to the UE including one dimensional antennas and predetermined three dimensional antennas.

In one or more embodiments of the present invention, it may not be required that each of the multiple transmission resources has different directivity from each other. One or more embodiments of the present invention may also apply to the multiple transmission resources have the same directivity.

Although the disclosure has been described with respect to only a limited number of embodiments, those skilled in the art, having benefit of this disclosure, will appreciate that various other embodiments may be devised without departing from the scope of the present invention. Accordingly, the scope of the invention should be limited only by the attached claims.

[Explanation of References]

| 1 | Wireless communication system |
|---|---|
| 10 | User equipment (UE) |
| 11 | Transmission resource |
| 101 | Antenna |
| 102 | Amplifier |
| 103 | Transceiver (transmitter/receiver) |
| 104 | Baseband signal processor |
| 105 | Application |
| 20 | Base station (BS) |
| 201 | Antenna |
| 202 | Amplifier |
| 203 | Transceiver (transmitter/receiver) |
| 204 | Baseband signal processor |
| 205 | Call processor |
| 206 | Transmission path interface |

**Claims**

1. A physical uplink shared channel, PUSCH, transmission method carried out by a user equipment, UE, to a base station, BS, the method comprising:

   receiving, from the BS, a sounding reference signal, SRS, resource indicator, SRI, that indicates SRS resources (S501);
   selecting, one or more transmission resources for use in PUSCH transmission, corresponding to the SRI (S502); and
   transmitting a PUSCH using the one or more selected transmission resources (S503), the method **characterised by**:
   transmitting, with the UE, transmission resource information as UE capability information (S701), the transmission resource information including the number of transmission resources which are simultaneously able to transmit signals from the UE, and
   the transmission resource information including the number of transceiver units, TXRUs, the number of streams, and the transport block size for each transmission resource.

2. A system comprising a user equipment, UE (10), and a base station, BS (20), the UE comprising:

   a receiver configured to receive, from the BS, a sounding reference signal, SRS, resource indicator, SRI, that indicates SRS resources;
   a processor configured to select one or more transmission resources for use in physical uplink shared channel, PUSCH, transmission, corresponding to the SRI; and
   a transmitter configured to transmit a PUSCH using the one or more selected transmission resources,
**characterised in that** the transmitter is configured to transmit transmission resource information as UE capability information, the transmission resource information including the number of transmission resources which are simultaneously able to transmit signals from the UE, and wherein the transmission resource information includes the number of transceiver units, TXRUs, the number of streams, and the transport block size for each transmission resource.

**Patentansprüche**

1. Physical-uplink-shared-channel- (gemeinsam genutzter physikalischer Aufwärtskanal), PUSCH, -Übertragungsverfahren, das von einem Benutzergerät, UE, zu einer Basisstation, BS, durchgeführt wird, wobei das Verfahren aufweist:

   Empfangen eines Sondierungsreferenzsignal-, SRS, -Ressourcenindikators, SRI, der SRS-Ressourcen angibt, von der BS (S501);
   Auswählen einer oder mehrerer Übertragungsressourcen zur Verwendung bei der PUSCH-Übertragung entsprechend dem SRI (S502); und
   Übertragen eines PUSCH unter Verwendung der ausgewählten einen oder mehreren Übertragungsressource(n) (S503),
   wobei das Verfahren **gekennzeichnet ist durch**:

   Übertragen von Übertragungsressourcen-Informationen als UE-Fähigkeitsinformationen mit dem UE (S701),
   wobei die Übertragungsressourcen-Informationen die Anzahl der Übertragungsressourcen enthalten, die gleichzeitig in der Lage sind, Signale von dem UE zu übertragen, und
   die Übertragungsressourcen-Informationen für jede Übertragungsressource die Anzahl von Transceiver-Einheiten, TXRUs, die Anzahl von Datenströmen und
   die Transportblockgröße enthalten.

2. System, das ein Benutzergerät, UE (10), und eine Basisstation, BS (20), aufweist, wobei das UE aufweist:

   einen Empfänger, der so konfiguriert ist, dass er von der BS einen Sondierungsreferenzsignal-, SRS, -Ressourcenindikator, SRI, empfängt, der SRS-Ressourcen angibt;
   einen Prozessor, der so konfiguriert ist, dass er entsprechend dem SRI eine oder mehrere Übertragungsressourcen zur Verwendung bei der Physical-uplink-shared-channel- (gemeinsam genutzten physikalischen Aufwärtskanal), PUSCH, -Übertragung auswählt; und einen Sender, der so konfiguriert ist, dass er einen PUSCH unter Verwendung der ausgewählten einen oder mehreren Übertragungsressource(n) überträgt,

**dadurch gekennzeichnet, dass** der Sender so konfiguriert ist, dass er Übertragungsressourcen-Informationen als UE-Fähigkeitsinformationen überträgt,

wobei die Übertragungsressourcen-Informationen die Anzahl der Übertragungsressourcen enthalten, die gleichzeitig in der Lage sind, Signale von dem UE zu übertragen, und

wobei die Übertragungsressourcen-Informationen für jede Übertragungsressource die Anzahl der Transceiver-Einheiten, TXRUs, die Anzahl der Datenströme und die Transportblockgröße enthalten.

## Revendications

1. Procédé de transmission par canal partagé de liaison physique montante, PUSCH, effectué par un équipement utilisateur, UE, vers une station de base, BS, le procédé comprenant :

la réception, par la BS, d'un signal de référence de sondage, SRS, d'un indicateur de ressources, SRI, qui indique des ressources SRS (S501) ;

la sélection d'une ou de plusieurs ressources de transmission pour une utilisation dans la transmission PUSCH, correspondant au SRI (S502) ; et

la transmission d'un PUSCH en utilisant l'une ou plusieurs ressources de transmission sélectionnée(s) (S503),

le procédé étant **caractérisé par** :

la transmission, avec l'UE, d'informations de ressources de transmission en tant qu'informations de capacité de l'UE (S701), les informations de ressources de transmission incluant le nombre de ressources de transmission qui sont simultanément capables de transmettre des signaux de l'UE, et les informations de ressources de transmission comprenant le nombre d'unités émettrices-réceptrices, TXRUs, le nombre de flux, et la taille du bloc de transport pour chaque ressource de transmission.

2. Système comprenant un équipement utilisateur, UE (10), et une station de base, BS (20), l'UE comprenant :

un récepteur configuré pour recevoir, de la BS, un signal de référence de sondage, SRS, un indicateur de ressources, SRI, qui indique des ressources SRS ;

un processeur configuré pour sélectionner une ou plusieurs ressources de transmission pour une utilisation dans une transmission par canal partagé de liaison physique montante, PUSCH, correspondant au SRI ; et

un émetteur configuré pour transmettre un PUSCH en utilisant l'une ou plusieurs ressources de transmission sélectionnée(s),

**caractérisé en ce que**

l'émetteur est configuré pour transmettre des informations de ressources de transmission en tant qu'informations de capacité de l'UE, les informations de ressources de transmission incluant le nombre de ressources de transmission qui sont simultanément capables de transmettre des signaux de l'UE, et

dans lequel les informations de ressources de transmission comprennent le nombre d'unités d'émetteur-récepteur, TXRUs, le nombre de flux, et la taille du bloc de transport pour chaque ressource de transmission.

FIG. 1

FIG. 2A

FIG. 2B

FIG. 2C

FIG. 2D

FIG. 2E

10

11A

Antenna element

11B

FIG. 3

FIG. 4

S101a Resource selection information
(Number of transmission resources)

S102a

Transmission resource selection
based on the number of
transmission resource index

S103 PUSCH transmission

FIG. 5

FIG. 6

FIG. 7

FIG. 8

FIG. 9

FIG. 10

FIG. 11

10

11B (Transmission resource index "2")

11C (Transmission resource index "3")

11D (Transmission resource index "4")

11A (Transmission resource index "1")

All combinations of transmission resources
(1, NA), (1, 2), (1, 3), (1, 4);
(2, NA), (2, 3), (2, 4);
(3, NA), (3, 4);
(4, NA)

Transmission resource index

Selectable transmission resource
(1, NA), (1, 2); (1, 4)
(2, NA), (2, 3);
(3, NA), (3, 4);
(4, NA)

FIG. 12

FIG. 13

SRS process
( SRS resource #1 associated with Transmission resource #1 )
SRS resource #2 associated with Transmission resource #2
( SRS resource #3 associated with Transmission resource #3 )

S601c

S602

Transmission
resource selection

SRS #1 transmission from Transmission resource #1

S603c

SRS #2 transmission from antenna panel#2

S603d

SRS #3 transmission from Transmission resource #3

S603e

FIG. 14

FIG. 15

FIG. 16

EP 3 497 805 B1

**EP 3 497 805 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2013042982 A1

- US 2014376482 A1